# EUROPEAN PATENT APPLICATION

(11) **EP 4 832 206 A1**
(43) Date of publication of application: **28.10.2026**
(21) Application number: 25767079.4
(22) Date of filing: 02.01.2025
(51) Int. Cl.: H01M 50/271, H01M 50/30

(54) **BATTERY, BATTERY PACK AND ELECTRICAL APPARATUS**

(30) Priority: 06.03.2024 CN 202410254427
(71) Applicant: Contemporary Amperex Technology Co., Limited, Ningde, Fujian 352100 (CN)
(72) Inventor: WU, Kai, Ningde, Fujian 352100 (CN); LIU, Shuangxu, Ningde, Fujian 352100 (CN); LIU, Sike, Ningde, Fujian 352100 (CN); QUAN, Chao, Ningde, Fujian 352100 (CN)
(74) Representative: Ran, Handong
(86) International application number: PCT/CN2025/070137
(87) International publication number: WO 2025/185334

(57) **Abstract**

The embodiments of the present disclosure belong to the technical field of batteries. Provided are a battery, a battery pack and an electrical apparatus. A wrapping structure forms an accommodation space, one side of the wrapping structure forming a pressure relief port communicated with the accommodation space, and the remaining portion of the wrapping structure being of a sealed structure. The wrapping structure comprises a casing and a top cover, the pressure relief port being formed in one side of the casing, the top cover and the casing defining the accommodation space, and the casing comprises a plurality of bending plates which bend in sequence. A conductive terminal is connected to the wrapping structure, the conductive terminal is installed on the top cover, and the conductive terminal and the pressure relief port are located on different sides of the wrapping structure. A battery cell is located in the accommodation space, and tabs of the battery cell are electrically connected to the conductive terminal. The bending plates at the two ends of the battery cell in the circumferential direction are connected, and the plurality of bending plates define the pressure relief port. The top cover and the pressure relief port are respectively located on the two opposite sides of the casing, and the top cover and the plurality of bending plates define the accommodation space. The battery of the embodiments of the present disclosure reduces the difficulty of installing the battery cell and the casing.

## Description

### CROSS-REFERENCE TO RELATED APPLICATION

The present disclosure is presented based on Chinese Patent Application No. 2024102544278, filed on March 6, 2024 and entitled "BATTERY, BATTERY PACK, ELECTRIC DEVICE, AND BATTERY MODULE", and claims priority to the Chinese Patent Application, the content of which is incorporated herein by reference in its entirety.

### TECHNICAL FIELD

The present disclosure relates to the technical field of batteries, and in particular, to a battery, a battery pack, and an electric device.

### BACKGROUND

Batteries are increasingly widely used in life and industry. For example, new energy vehicles equipped with batteries have been widely used. In addition, batteries are also increasingly used in energy storage and other fields.

The battery is mounted in the case of the battery pack, and the battery cell of the battery is mounted in the housing of the enclosure structure. In the related art, there is some difficulty in mounting the battery cell into the housing.

### SUMMARY

In view of this, embodiments of the present disclosure are intended to provide a battery, a battery pack, and an electric device, aiming to reduce the difficulty of mounting the battery cell and the housing.

To achieve the above objective, the technical solutions of the embodiments of the present disclosure are implemented as follows:

The embodiments of the present disclosure provide a battery. The battery includes:
an enclosure structure, defining an accommodating space, where a pressure relief opening in communication with the accommodating space is formed on one side of the enclosure structure, and a remaining part of the enclosure structure is a sealing structure; the enclosure structure includes a housing and a top cover, the pressure relief opening is formed on one side of the housing, the top cover and the housing define, in an enclosing manner, the accommodating space, and the housing includes a plurality of bent plates that are sequentially bent;
a conductive terminal, connected to the enclosure structure, where the conductive terminal is mounted to the top cover, and the conductive terminal and the pressure relief opening are located on different sides of the enclosure structure; and
a battery cell, located in the accommodating space, where a tab of the battery cell is electrically connected to the conductive terminal, bent plates at two circumferential ends of the battery cell are connected, and the plurality of bent plates define, in an enclosing manner, the pressure relief opening; the top cover and the pressure relief opening are located on two opposite sides of the housing, respectively, and the top cover and the plurality of bent plates define, in an enclosing manner, the accommodating space.

In the embodiments of the present disclosure, since the housing is not an integrally formed structure, before the battery cell is mounted to the housing, the housing can be in an unfolded state, or the plurality of bent plates of the housing can be appropriately unfolded. After the housing is unfolded, the mounting of the battery cell is no longer limited by the internal space of the housing, and during the process of mounting the battery cell into the housing, the battery cell is substantially free from pressing or scratching by the housing, and the battery cell can be conveniently mounted into the housing, thereby reducing the difficulty of mounting the battery cell and the housing.

In an embodiment, the housing is made of metal, the battery further includes a reinforcing plate, and the reinforcing plate is located on an inner surface of the housing; the bent plates at the two circumferential ends of the battery cell are connected by welding, a position where the bent plates at the two circumferential ends of the battery cell are welded is a target position, and the reinforcing plate is welded to the housing at the target position.

In the embodiments of the present disclosure, the reinforcing plate is welded to the housing at the target position, such that the housing and the reinforcing plate are welded together, and the reinforcing plate supports the housing at the target position, thereby reducing the possibility of the bent plates at two ends of the housing being welded through during the welding process.

In an embodiment, the reinforcing plate is located between the bent plates at the two circumferential ends of the battery cell.

In the embodiments of the present disclosure, during the welding process, a weld spot penetrates through the reinforcing plate, such that two sides of the reinforcing plate are connected to the corresponding bent plates, respectively, and the bent plates on two sides can be firmly connected together via the welded-through reinforcing plate.

In an embodiment, the bent plates at the two circumferential ends of the battery cell are located on a side, facing away from the battery cell, of the reinforcing plate.

In the embodiments of the present disclosure, the weld spot can weld the bent plates at two circumferential ends together without penetrating through the reinforcing plate. Since the weld spot does not need to penetrate through the reinforcing plate, the possibility of damage to the battery cell during the welding process is reduced.

In an embodiment, the enclosure structure further includes an insulating layer, and the insulating layer covers the inner surface of the housing.

In the embodiments of the present disclosure, the housing is substantially of a flat-plate shape in the unfolded state. The insulating layer may first cover the housing in the unfolded state, and then the housing and the insulating layer are bent together. After the housing is bent into shape, the insulating layer covers the inner surface of the housing. The insulating layer covers the housing when the housing is in the unfolded state, such that the insulating layer can be conveniently mounted to the housing.

In an embodiment, the battery further includes a separating layer, and battery cells are disposed on two opposite sides of the separating layer in a thickness direction of the separating layer to separate the battery cells on the two sides; the housing is made of metal, and the bent plates at the two circumferential ends of the battery cell are welded to form a weld spot, the weld spot being located on one side of the separating layer in a preset direction, where the preset direction is perpendicular to the thickness direction of the separating layer, and a projection region of the weld spot in the preset direction is located in a projection region of the separating layer in the preset direction.

In the embodiments of the present disclosure, since the projection region of the weld spot in the preset direction is located in the projection region of the separating layer in the preset direction, the weld spot avoids the battery cells on two sides of the separating layer as much as possible, thereby reducing the possibility of damage to the battery cell during the welding process.

In an embodiment, a maximum span of the weld spot in the thickness direction of the separating layer is a preset distance, a ratio of a thickness of the separating layer to the preset distance is greater than or equal to 1.2, and the ratio of the thickness of the separating layer to the preset distance is less than or equal to 3.

In the embodiments of the present disclosure, the ratio of the thickness of the separating layer to the preset distance is greater than or equal to 1.2; the thickness of the separating layer is sufficiently greater than the preset distance of the weld spot, such that the weld spot can be as far away as possible from the battery cells on two sides of the separating layer, thereby reducing the damage to the battery cell during the welding process. The ratio of the thickness of the separating layer 7 to the preset distance is less than or equal to 3, which can limit the thickness of the separating layer, thereby facilitating the improvement of the volumetric energy density of the battery to some extent.

In an embodiment, the ratio of the thickness of the separating layer to the preset distance is greater than or equal to 1.5, and the ratio of the thickness of the separating layer to the preset distance is less than or equal to 2.5.

In the embodiments of the present disclosure, the ratio of the thickness of the separating layer to the preset distance is greater than or equal to 1.5; the thickness of the separating layer is sufficiently greater than the preset distance of the weld spot, such that the weld spot can be as far away as possible from the battery cells on two sides of the separating layer, thereby reducing the damage to the battery cell during the welding process. The ratio of the thickness of the separating layer 7 to the preset distance is less than or equal to 2.5, which can limit the thickness of the separating layer, thereby facilitating the improvement of the volumetric energy density of the battery to some extent.

In an embodiment, the thickness direction of the separating layer is arranged to intersect with a large surface of the battery cell.

In the embodiments of the present disclosure, since the expansion of the battery cell during the charging and discharging process is mainly in the direction perpendicular to the large surface of the battery cell, the thickness direction of the separating layer is arranged to intersect with the direction of the large surface of the battery cell, which is conducive to providing sufficient space for the expansion of the battery cell, thereby better buffering the expansion of the battery cell.

In an embodiment, the battery cell is a pouch battery cell.

A second aspect of the embodiments of the present disclosure provides a battery pack. The battery pack includes:
a case; and
the battery according to any one of the above embodiments, located in the case.

A third aspect of the embodiments of the present disclosure provides an electric device. The electric device includes:
a device body; and
the battery pack according to any one of the above embodiments, mounted to the device body to supply power to the device body.

According to the battery provided in the embodiments of the present disclosure, since the housing is not an integrally formed structure, before the battery cell is mounted to the housing, the housing can be in an unfolded state, or the plurality of bent plates of the housing can be appropriately unfolded. After the housing is unfolded, the mounting of the battery cell is no longer limited by the internal space of the housing, and during the process of mounting the battery cell into the housing, the battery cell is substantially free from pressing or scratching by the housing, and the battery cell can be conveniently mounted into the housing, thereby reducing the difficulty of mounting the battery cell and the housing.

### BRIEF DESCRIPTION OF THE DRAWINGS

FIG. 1 is a schematic structural diagram of a battery according to an embodiment of the present disclosure, which shows an inlet and an outlet of a temperature regulation container that extend out of an accommodating space;
FIG. 2 is a schematic structural diagram of a battery according to an embodiment of the present disclosure, which shows a conductive terminal;
FIG. 3 is an exploded view of a battery according to an embodiment of the present disclosure;
FIG. 4 is an assembly diagram of a housing and an insulating layer according to an embodiment of the present disclosure;
FIG. 5 is a schematic diagram along line A-A in FIG. 4;
FIG. 6 is an enlarged view of portion B in FIG. 5;
FIG. 7 is an arrangement diagram of a temperature regulation container and a battery cell according to an embodiment of the present disclosure;
FIG. 8 is a schematic structural diagram of a temperature regulation container according to an embodiment of the present disclosure;
FIG. 9 is an assembly diagram of a top cover and a housing according to an embodiment of the present disclosure;
FIG. 10 is an arrangement diagram of at least two batteries that are sequentially arranged according to an embodiment of the present disclosure;
FIG. 11 is an assembly diagram of a housing and a battery cell in the housing according to an embodiment of the present disclosure, where the figure is used to show a sectional position of the housing; the housing shown in the figure does not mean a specific embodiment of a connecting structure of the housing, and a separating layer may be or may not be provided between adjacent battery cells shown in the figure;
FIG. 12 is a cross-sectional view along line C-C in FIG. 11, in which bent plates at two circumferential ends of a battery cell are located on a side, facing away from the battery cell, of a reinforcing plate;
FIG. 13 is an enlarged view of portion D in FIG. 12;
FIG. 14 is a cross-sectional view along line C-C in FIG. 11, in which a reinforcing plate is located between bent plates at two circumferential ends of a battery cell;
FIG. 15 is an enlarged view of portion E in FIG. 14;
FIG. 16 is a cross-sectional view along line C-C in FIG. 11, in which a separating layer is provided between two adjacent battery cells;
FIG. 17 is a view in the direction F in FIG. 16;
FIG. 18 is a schematic structural diagram of a bare cell with a wound structure according to an embodiment of the present disclosure; and
FIG. 19 is a schematic structural diagram of a bare cell with a stacked structure according to an embodiment of the present disclosure.

Description of the reference numerals:
1. enclosure structure; 11. accommodating space; 12. pressure relief opening; 13. housing; 131. bent plate; 14. top cover; 141. flange; 15. insulating layer; 2. conductive terminal; 21. connecting electrode; 22. sampling electrode; 3. battery cell; 31. tab; 4. flame-retardant cover; 41. score; 42. through hole; 5. temperature regulation container; 51. temperature regulation chamber; 52. inlet; 53. outlet; 54. container body; 55. first flow guide plate; 56. second flow guide plate; 6. reinforcing plate; 100. battery; 7. separating layer; 8. weld spot; 91. positive electrode plate; 92. negative electrode plate; 93. separator; 94. straight region; 95. bent region.

### DETAILED DESCRIPTION

The following describes in detail embodiments of technical solutions of the present disclosure with reference to the drawings. The following embodiments are merely used to more clearly illustrate the technical solutions of the present disclosure, and therefore, are only exemplary and do not limit the protection scope of the present disclosure.

Unless otherwise defined, all technical and scientific terms used herein have the same meaning as commonly understood by those skilled in the art to which the present disclosure belongs. The terms used herein are intended to merely describe the specific embodiments, rather than to limit the present disclosure. The terms "include", "comprise", "have", and "provided with", and any other variants thereof in the embodiments of the present disclosure are intended to cover non-exclusive inclusions.

In the description of the embodiments of the present disclosure, the technical terms "first", "second", "third", and the like are merely intended to distinguish different objects and should not be understood as any indication or implication of relative importance or any implicit indication of the number, specific sequence, or priority of the technical features indicated. In the description of the embodiments of the present disclosure, unless otherwise specifically defined, "plurality of" means two or more.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present disclosure, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and defined, the technical term "contact" should be interpreted in a broad sense. For example, the "contact" may be direct contact, or contact through an intermediate medium layer, or contact without an interaction force between two contacting elements, or contact with an interaction force between two contacting elements.

In the related art, the housing of the enclosure structure of the battery is substantially an integrally formed structure, the housing of the battery covers the outside of the battery cell, and one or at least two battery cells are located in the housing. The top cover and the pressure relief opening are located on two opposite sides of the housing, respectively. In the direction perpendicular to the arrangement direction of the top cover and the pressure relief opening, the battery cell almost occupies the entire space inside the housing. Therefore, during the process of mounting the battery cell into the housing, due to the limited space of the accommodating space, pressing and scratching may occur between the battery cell and the housing, resulting in great difficulty in mounting.

According to the battery of the embodiments of the present disclosure, the housing of the enclosure structure of the battery is no longer an integrally formed structure, but is formed by a plurality of bent plates being connected after bending. During the process of mounting the battery cell to the housing, the housing may first be unfolded, the battery cell is placed on the unfolded housing, and then the bent plates of the housing are connected to form a housing that is connected end to end in the circumferential direction.

The solutions of the embodiments of the present disclosure may be, but are not limited to, applied to a battery, a battery pack including a battery, and an electric device including a battery pack.

The battery according to the embodiments of the present disclosure may be used in, but is not limited to, electric devices such as energy storage power systems, vehicles, ships, or aircraft.

The batteries according to the embodiments of the present disclosure may also be grouped together for use as a battery pack. The battery pack may also be used in, but is not limited to, electric devices such as energy storage power systems, vehicles, ships, or aircraft. Using the battery pack can provide higher total energy. Moreover, the battery pack is formed by disposing a plurality of grouped batteries in a sealed case, thereby providing more reliable dustproof and waterproof performance. Therefore, the battery pack can be applied in harsher and more humid environments, and even in submerged usage scenarios.

In the embodiments of the present disclosure, the battery cell may be a secondary battery. The secondary battery refers to a battery cell that can continue to be used by activating an active material through charging after the battery cell is discharged.

In the embodiments of the present disclosure, the battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present disclosure.

The embodiments of the present disclosure provide an electric device including the above battery or battery pack configured to provide electric energy. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

The electric device according to the embodiments of the present disclosure includes a device body and a battery pack, and the battery pack is mounted to the device body to supply power to the device body.

In the embodiments of the present disclosure, the battery pack supplies power to the device body, such that the device body receives the electric energy required to maintain normal operation.

The battery pack according to the embodiments of the present disclosure includes a case and a battery 100, and the battery 100 is located in the case.

In the embodiments of the present disclosure, the battery 100 is located in the case, and the case and the battery 100 in the case are used as a whole to supply power to the outside. The case can better protect the battery 100 in the case.

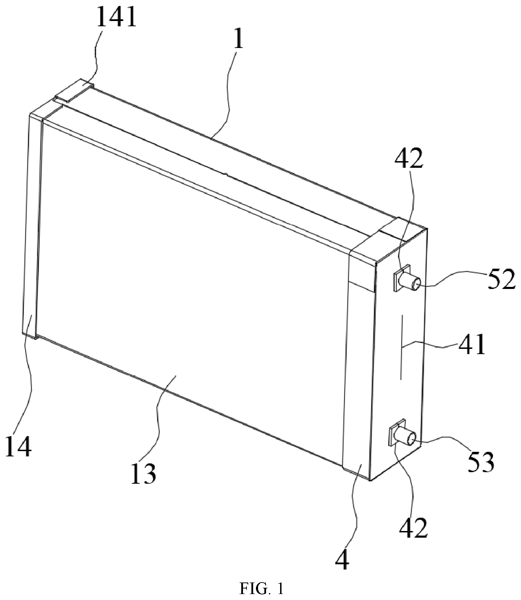

According to the battery 100 of the embodiments of the present disclosure, referring to FIGs. 1 to 6, the battery 100 includes an enclosure structure 1, a conductive terminal 2, and a battery cell 3. The enclosure structure 1 defines an accommodating space 11, a pressure relief opening 12 in communication with the accommodating space 11 is formed on one side of the enclosure structure 1, and the remaining part of the enclosure structure 1 is a sealing structure. The enclosure structure 1 includes a housing 13 and a top cover 14. The pressure relief opening 12 is formed on one side of the housing 13, the top cover 14 and the housing 13 define, in an enclosing manner, the accommodating space 11, and the housing 13 includes a plurality of bent plates 131 that are sequentially bent. The conductive terminal 2 is connected to the enclosure structure 1, the conductive terminal 2 is mounted to the top cover 14, and the conductive terminal 2 and the pressure relief opening 12 are located on different sides of the enclosure structure 1. The battery cell 3 is located in the accommodating space 11, a tab 31 of the battery cell 3 is electrically connected to the conductive terminal 2, and bent plates 131 at two circumferential ends of the battery cell 3 are connected. The plurality of bent plates 131 define, in an enclosing manner, the pressure relief opening 12, the top cover 14 and the pressure relief opening 12 are located on two opposite sides of the housing 13, respectively, and the top cover 14 and the plurality of bent plates 131 define, in an enclosing manner, the accommodating space 11.

The enclosure structure 1 is a structure that encloses the battery cell 3, and the accommodating space 11 of the enclosure structure 1 is mainly configured to accommodate the battery cell 3.

The conductive terminal 2 is electrically connected to the tab 31 of the battery cell 3, and the battery cell 3 supplies power to the outside via the conductive terminal 2, or the external power supply supplies power to the battery cell 3 via the conductive terminal 2.

Illustratively, the conductive terminal 2 is a busbar. The plurality of batteries 100 in the battery pack are connected in series, in parallel, or in parallel-series via the busbar.

Illustratively, the battery cell 3 includes a bare cell and an outer packaging that covers the bare cell to protect the bare cell. The bare cell includes a positive electrode plate 91, a negative electrode plate 92, and a separator 93 located between the positive electrode plate 91 and the negative electrode plate 92.

Illustratively, the separator 93 is a separation film.

The pressure relief opening 12 in communication with the accommodating space 11 is formed on one side of the enclosure structure 1, and the remaining part of the enclosure structure 1 is a sealing structure, which means that parts of the enclosure structure 1 covering the battery cell 3, other than the pressure relief opening 12, are substantially sealed. That is, parts of the enclosure structure 1 covering the battery cell 3, other than the pressure relief opening 12, may be fully sealed or may not be fully sealed. For the case where parts of the enclosure structure 1 covering the battery cell 3, other than the pressure relief opening 12, are not fully sealed, it is only necessary that the gaps at the positions where the enclosure structure 1 is not fully sealed can suppress, to some extent, the thermal runaway gas from being ejected from the positions where the enclosure structure 1 is not fully sealed, thereby guiding the thermal runaway gas to be ejected from the pressure relief opening 12.

The conductive terminal 2 and the pressure relief opening 12 are located on different sides of the enclosure structure 1; the thermal runaway gas ejected from the pressure relief opening 12 can be as far away as possible from the conductive terminal 2.

Illustratively, the number of battery cells 3 in the enclosure structure 1 may be one or at least two.

The housing 13 includes a plurality of bent plates 131. The housing 13 is formed by bending a single plate multiple times and connecting the bent plates 131 at two ends. The state of the housing 13 before bending is an unfolded state.

Illustratively, the housing 13 may be in the unfolded state, the battery cell 3 is placed on the housing 13 in the unfolded state, and then the housing 13 is bent into a plurality of bent plates 131 and the bent plates 131 at two circumferential ends are connected.

Illustratively, the plurality of bent plates 131 that are bent may be appropriately unfolded to some extent, the battery cell 3 is placed in the plurality of bent plates 131 that are appropriately unfolded, and the bent plates 131 at two circumferential ends are connected.

In the embodiments of the present disclosure, since the housing 13 is not an integrally formed structure, before the battery cell 3 is mounted to the housing 13, the housing 13 can be in an unfolded state, or the plurality of bent plates 131 of the housing 13 can be appropriately unfolded. After the housing is unfolded, the mounting of the battery cell 3 is no longer limited by the internal space of the housing 13, and during the process of mounting the battery cell 3 into the housing 13, the battery cell 3 is substantially free from pressing or scratching by the housing 13, and the battery cell 3 can be conveniently mounted into the housing 13, thereby reducing the difficulty of mounting the battery cell 3 and the housing 13.

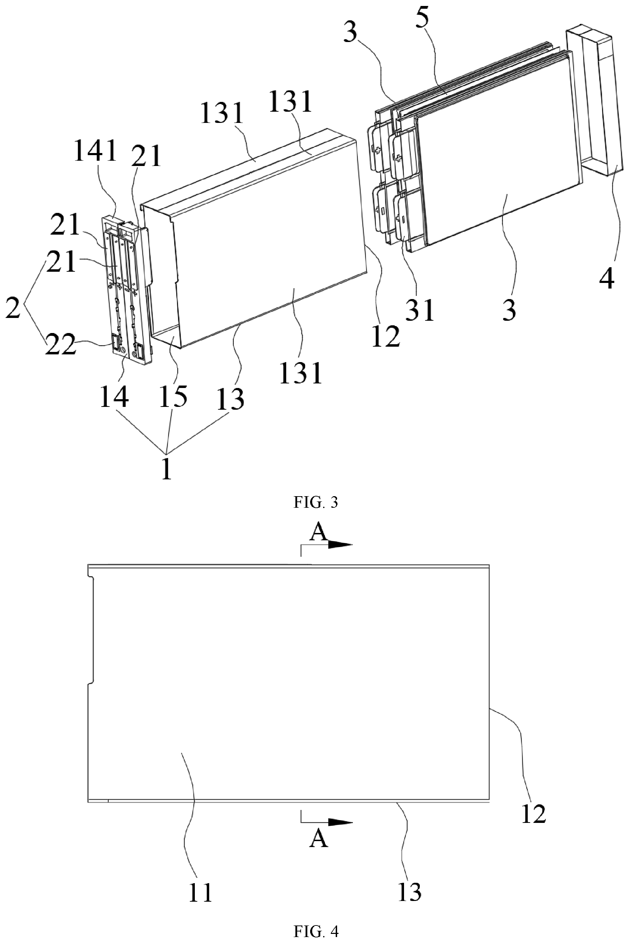

In an embodiment, referring to FIGs. 4 to 6 and FIGs. 11 to 15, the housing 13 is made of metal; the battery 100 further includes a reinforcing plate 6, and the reinforcing plate 6 is located on an inner surface of the housing 13. The bent plates 131 at the two circumferential ends of the battery cell 3 are connected by welding. The position where the bent plates 131 at the two circumferential ends of the battery cell 3 are welded is a target position, and the reinforcing plate 6 is welded to the housing 13 at the target position.

It should be noted that the reinforcing plate 6 is welded to the housing 13, and the reinforcing plate 6 is made of a material that can be welded to the housing 13.

Illustratively, both the housing 13 and the reinforcing plate 6 are made of metal.

Illustratively, the thickness of the reinforcing plate 6 is 0.2 mm.

In the embodiments of the present disclosure, the reinforcing plate 6 is welded to the housing 13 at the target position, such that the housing 13 and the reinforcing plate 6 are welded together, and the reinforcing plate 6 supports the housing 13 at the target position, thereby reducing the possibility of the bent plates 131 at two ends of the housing 13 being welded through during the welding process.

It can be understood that the specific structure of the battery 100 is not limited. Illustratively, the battery 100 may not be provided with the reinforcing plate 6.

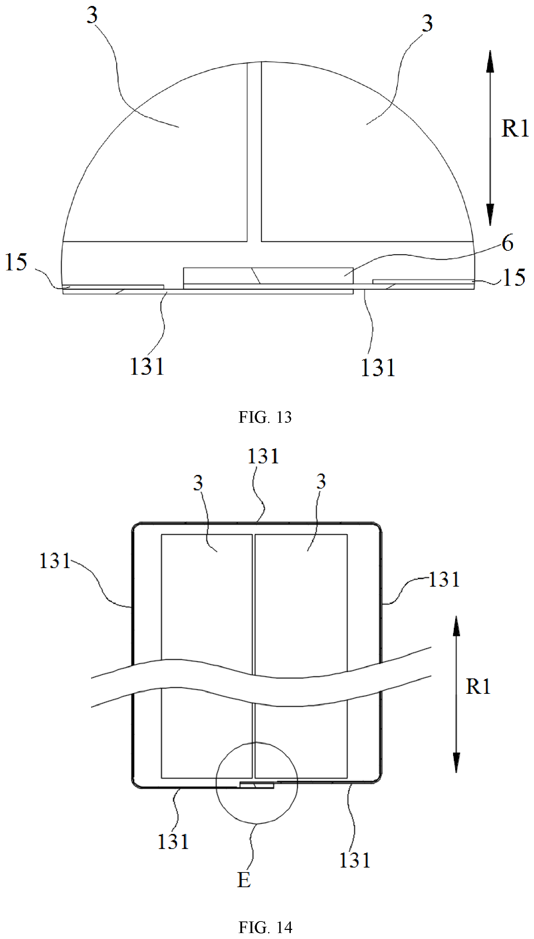

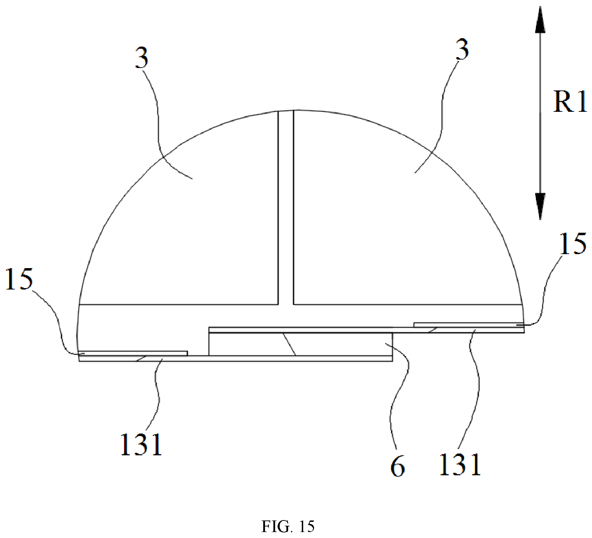

In an embodiment, referring to FIGs. 14 and 15, in the bent plates 131 at two circumferential ends of the battery cell 3, the reinforcing plate 6 is located on a side of one of the bent plates 131 facing the other bent plate 131 in the arrangement direction of the bent plate 131 and the battery cell 3.

Illustratively, referring to FIGs. 14 and 15, the arrangement direction of the bent plate 131 and the battery cell 3 is the direction indicated by the arrow R1 shown in the figure.

Illustratively, referring to FIGs. 14 and 15, the reinforcing plate 6 is located between the bent plates 131 at two circumferential ends of the battery cell 3 in the direction indicated by the arrow R1 shown in the figure.

In the embodiments of the present disclosure, during the welding process, a weld spot 8 penetrates through the reinforcing plate 6, such that two sides of the reinforcing plate 6 are connected to the corresponding bent plates 131, respectively, and the bent plates 131 on two sides can be firmly connected together via the welded-through reinforcing plate 6.

In an embodiment, referring to FIGs. 4 to 6 and FIGs. 11 to 13, the bent plates 131 at two circumferential ends of the battery cell 3 are located on a side, facing away from the battery cell 3, of the reinforcing plate 6.

Illustratively, the weld spot 8 may penetrate through the bent plates 131 at two circumferential ends of the battery cell 3 to better connect the bent plates 131 at two ends.

Illustratively, the weld spot 8 formed on the reinforcing plate 6 may be located on the side, facing away from the battery cell 3, of the reinforcing plate 6.

In the embodiments of the present disclosure, the weld spot 8 can weld the bent plates 131 at two circumferential ends together without penetrating through the reinforcing plate 6. Since the weld spot 8 does not need to penetrate through the reinforcing plate 6, the possibility of damage to the battery cell 3 during the welding process is reduced.

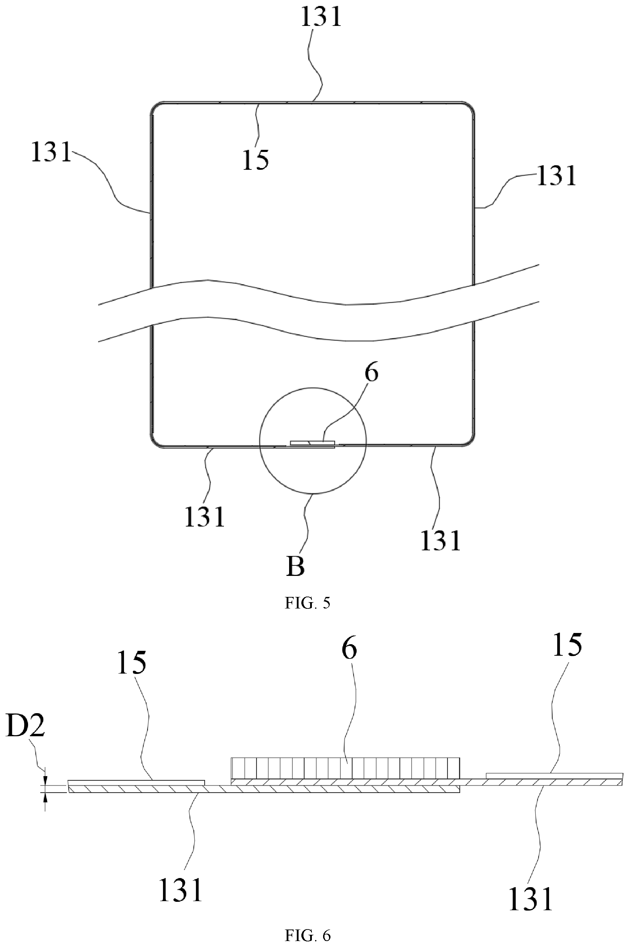

In an embodiment, referring to FIGs. 6, 13, and 15, the enclosure structure 1 further includes an insulating layer 15, and the insulating layer 15 covers the inner surface of the housing 13.

Illustratively, the insulating layer 15 covers the housing 13 by means of hot pressing.

Illustratively, the insulating layer 15 is formed on the housing 13 by coating.

In the embodiments of the present disclosure, the housing 13 is substantially of a flat-plate shape in the unfolded state. The insulating layer 15 may first cover the housing 13 in the unfolded state, and then the housing 13 and the insulating layer 15 are bent together. After the housing 13 is bent into shape, the insulating layer 15 covers the inner surface of the housing 13. The insulating layer 15 covers the housing 13 when the housing 13 is in the unfolded state, such that the insulating layer 15 can be conveniently mounted to the housing 13.

It can be understood that the specific structural form of the enclosure structure 1 is not limited. Illustratively, the insulating layer 15 may not be provided in the enclosure structure 1 as required.

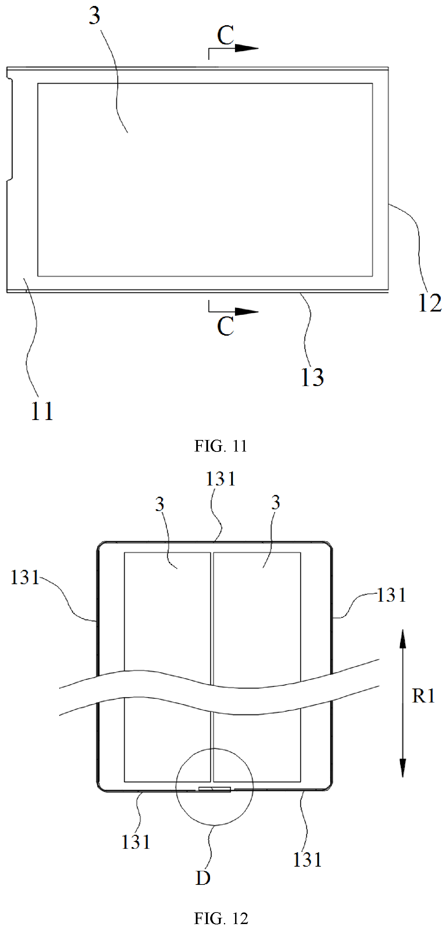

In an embodiment, referring to FIGs. 11, 16, and 17, the battery 100 further includes a separating layer 7, and battery cells 3 are disposed on two opposite sides of the separating layer 7 in a thickness direction of the separating layer to separate the battery cells 3 on the two sides. The housing 13 is made of metal, and the bent plates 131 at two circumferential ends of the battery cell 3 are welded to form a weld spot 8. The weld spot 8 is located on one side of the separating layer 7 in a preset direction. The preset direction is perpendicular to the thickness direction of the separating layer 7, and a projection region of the weld spot 8 in the preset direction is located in a projection region of the separating layer 7 in the preset direction.

Illustratively, the separating layer 7 can provide some buffering space for the expansion of the battery cell 3.

Illustratively, the separating layer 7 may have some buffering capability.

Illustratively, the separating layer 7 may have some heat insulation capability.

Illustratively, the separating layer 7 may be a heat insulation pad.

Illustratively, the separating layer 7 may be made of rubber, silicone gel, or the like.

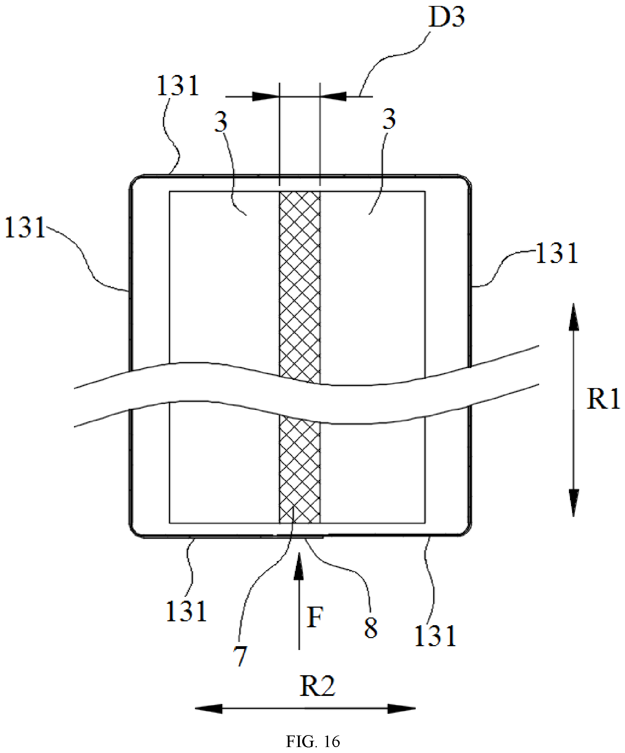

Illustratively, referring to FIG. 16, the preset direction is the direction indicated by the arrow R1 shown in the figure.

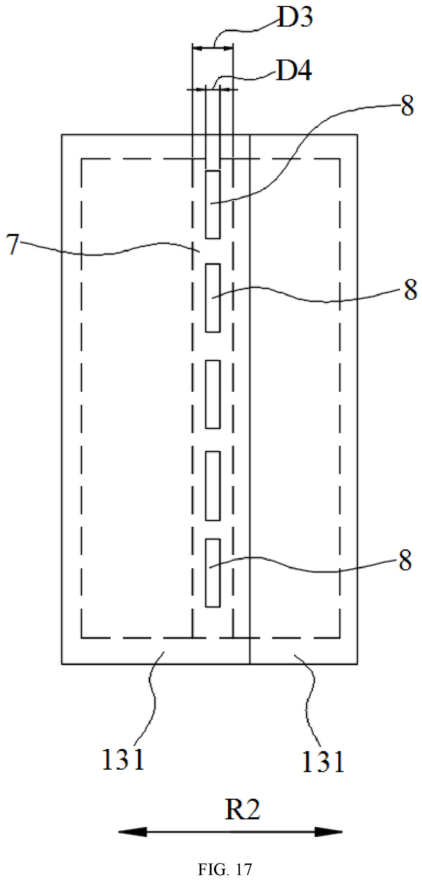

Illustratively, referring to FIGs. 16 and 17, the thickness direction of the separating layer 7 is the direction indicated by the arrow R2 shown in the figure.

In the embodiments of the present disclosure, since the projection region of the weld spot 8 in the preset direction is located in the projection region of the separating layer 7 in the preset direction, the weld spot 8 avoids the battery cells 3 on two sides of the separating layer 7 as much as possible, thereby reducing the possibility of damage to the battery cell 3 during the welding process.

It can be understood that the arrangement manner of the weld spot 8 is not limited. In an embodiment, the projection region of the weld spot 8 in the preset direction may be partially located outside the projection region of the separating layer 7 in the preset direction.

In an embodiment, referring to FIGs. 16 and 17, the maximum span of the weld spot 8 in the thickness direction of the separating layer 7 is a preset distance, the ratio of the thickness of the separating layer 7 to the preset distance is greater than or equal to 1.2, and the ratio of the thickness of the separating layer 7 to the preset distance is less than or equal to 3.

Illustratively, referring to FIGs. 16 and 17, the thickness of the separating layer 7 is D3, the preset thickness is D4, and 1.2 ≤ D3/D4 ≤ 3.

Illustratively, the ratio of the thickness of the separating layer 7 to the preset distance may be 1.2, 1.3, 1.5, 1.7, 1.9, 2.0, 2.2, 2.5, 2.6, 2.8, 2.9, or 3.0.

In the embodiments of the present disclosure, the ratio of the thickness of the separating layer 7 to the preset distance is greater than or equal to 1.2; the thickness of the separating layer 7 is sufficiently greater than the preset distance of the weld spot 8, such that the weld spot 8 can be as far away as possible from the battery cells 3 on two sides of the separating layer 7, thereby reducing the damage to the battery cell 3 during the welding process. The ratio of the thickness of the separating layer 7 to the preset distance is less than or equal to 3, which can limit the thickness of the separating layer 7, thereby facilitating the improvement of the volumetric energy density of the battery 100 to some extent.

In an embodiment, referring to FIGs. 16 and 17, the ratio of the thickness of the separating layer 7 to the preset distance is greater than or equal to 1.5, and the ratio of the thickness of the separating layer 7 to the preset distance is less than or equal to 2.5.

Illustratively, referring to FIGs. 16 and 17, the thickness of the separating layer 7 is D3, the preset thickness is D4, and 1.5 ≤ D3/D4 ≤ 2.5.

Illustratively, the ratio of the thickness of the separating layer 7 to the preset distance may be 1.5, 1.65, 1.7, 1.8, 1.9, 2.0, 2.2, 2.3, or 2.5.

In the embodiments of the present disclosure, the ratio of the thickness of the separating layer 7 to the preset distance is greater than or equal to 1.5; the thickness of the separating layer 7 is sufficiently greater than the preset distance of the weld spot 8, such that the weld spot 8 can be as far away as possible from the battery cells 3 on two sides of the separating layer 7, thereby reducing the damage to the battery cell 3 during the welding process. The ratio of the thickness of the separating layer 7 to the preset distance is less than or equal to 2.5, which can limit the thickness of the separating layer 7, thereby facilitating the improvement of the volumetric energy density of the battery 100 to some extent.

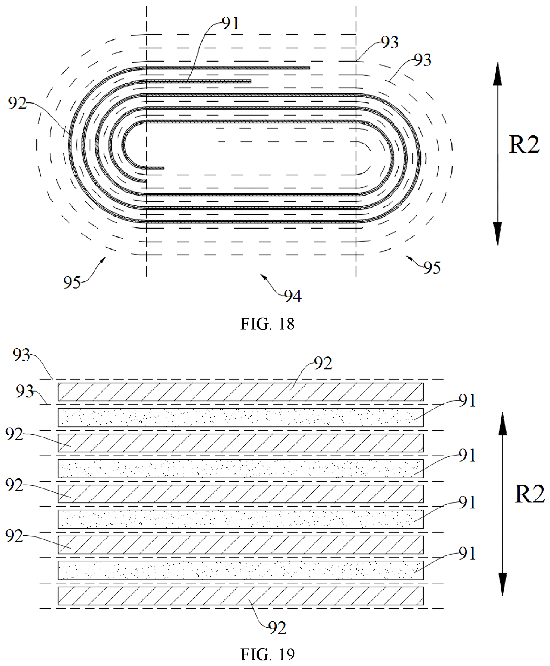

In an embodiment, referring to FIGs. 16 to 19, the thickness direction of the separating layer 7 is arranged to intersect with a large surface of the battery cell 3.

The large surface of the battery cell 3 refers to the surface with the largest area in the battery cell 3.

Illustratively, the battery cell 3 includes a bare cell. The bare cell includes a positive electrode plate 91, a negative electrode plate 92, and a separator 93. The separator 93 is disposed between the positive electrode plate 91 and the negative electrode plate 92 to insulate the positive electrode plate 91 from the negative electrode plate 92.

Illustratively, the separator 93 is a separation film.

Illustratively, the positive electrode plate 91, the negative electrode plate 92, and the separator 93 are wound together to form a wound structure. The bare cell has straight regions 94 and bent regions 95, the bent regions 95 are provided on two opposite sides of the straight region 94, and the direction in which a part of the positive electrode plate 91 in the straight region 94, a part of the separator region in the straight region 94, and a part of the negative electrode plate 92 in the straight region 94 are sequentially stacked is the thickness direction of the separating layer 7.

Illustratively, the positive electrode plate 91, the separator 93, and the negative electrode plate 92 are sequentially stacked to form a stacked structure, and the direction in which the positive electrode plate 91, the separator 93, and the negative electrode plate 92 are sequentially stacked is the thickness direction of the separating layer 7.

Illustratively, the battery cell 3 further includes a sealing bag that covers the bare cell, and the sealing bag is configured to seal the electrolyte inside so as to immerse the bare cell in the electrolyte.

Illustratively, the sealing bag is made of an aluminum-plastic film.

In the embodiments of the present disclosure, since the expansion of the battery cell 3 during the charging and discharging process is mainly in the direction perpendicular to the large surface of the battery cell 3, the thickness direction of the separating layer 7 is arranged to intersect with the direction of the large surface of the battery cell 3, which is conducive to providing sufficient space for the expansion of the battery cell 3, thereby better buffering the expansion of the battery cell 3.

It can be understood that the thickness direction of the separating layer 7 is not limited. Illustratively, the thickness direction of the separating layer 7 may be parallel to the large surface of the battery cell 3.

In an embodiment, the battery cell 3 is a pouch battery cell.

In an embodiment, a pouch battery cell with a dimension of 7 mm × 150 mm × 275 mm is used as the battery cell 3, and the pouch battery cell employs an unformed dry bare cell, i.e., the electrolyte has not been injected into the pouch battery cell, thereby reducing the possibility of thermal runaway. Battery cells 3 are disposed on two opposite sides of the separating layer 7 in the thickness direction of the separating layer to separate the battery cells 3 on the two sides. A plurality of samples of the batteries 100 are provided. The thickness of the separating layer 7 of each sample of the battery 100 is D3, and the value of the thickness of the separating layer 7 of each sample of the battery 100 is determined based on actual needs. The maximum span of the weld spot 8 corresponding to each sample of the battery 100 in the thickness direction of the separating layer 7 is a preset distance. The preset distance is D4. The value of the preset distance of the weld spot 8 of each sample of the battery 100 is determined based on actual needs, and the preset distance of the weld spot 8 is adjusted by adjusting the welding power. The thickness of the housing 13 of each sample of the battery 100 is 0.2 mm. The housings 13 corresponding to the respective samples of the batteries 100 are used to cover the separating layers 7 with a corresponding thickness, and the pouch battery cells. The housings 13 are welded and then disassembled to inspect whether the pouch battery cells inside the housings 13 are damaged. For example, the presence of damage on the surface of the pouch battery cell can be determined by inspecting whether black burn spots caused by welding are present on the surface of the pouch battery cell. If black burn spots caused by welding are present on the surface of the pouch battery cell, the pouch battery cell is damaged. For example, gas leakage from the aluminum-plastic film of the pouch battery cell can be determined by introducing gas into the pouch battery cell. If gas leakage from the aluminum-plastic film of the pouch battery cell occurs, the pouch battery cell is damaged. For example, the presence of black burn spots caused by welding on the bare cell in the aluminum-plastic film can be determined by opening the aluminum-plastic film of the pouch battery cell. If black burn spots caused by welding are present, the pouch battery cell is damaged. If there is no gas leakage from the aluminum-plastic film of the pouch battery cell, no black burn spots caused by welding on the surface of the pouch battery cell, and no black burn spots caused by welding on the bare cell of the pouch battery cell, the pouch battery cell is not damaged. The experimental data are shown in Table 1.

**Table 1**

| D3/mm | D4/mm | D3/D4 | Number of samples of batteries for testing | Number of damaged samples | Number of undamaged samples |
|---|---|---|---|---|---|
| 1 | 1.0 | 1 | 10 | 3 | 7 |
| 1.2 | 1.0 | 1.2 | 10 | 0 | 10 |
| 1 | 0.8 | 1.25 | 10 | 0 | 10 |
| 1.2 | 0.8 | 1.5 | 10 | 0 | 10 |
| 0.8 | 0.8 | 1 | 10 | 4 | 6 |
| 1 | 1.5 | 0.67 | 10 | 10 | 0 |
| 1.5 | 1.5 | 1 | 10 | 8 | 2 |
| 2 | 1.5 | 1.33 | 10 | 0 | 10 |

According to the battery 100 of the embodiments of the present disclosure, referring to FIGs. 1 to 3, the battery 100 includes an enclosure structure 1, a conductive terminal 2, and a battery cell 3. The enclosure structure 1 defines an accommodating space 11, a pressure relief opening 12 in communication with the accommodating space 11 is formed on one side of the enclosure structure 1, and the remaining part of the enclosure structure 1 is a sealing structure. The conductive terminal 2 is connected to the enclosure structure 1, and the conductive terminal 2 and the pressure relief opening 12 are located on different sides of the enclosure structure 1. The battery cell 3 is located in the accommodating space 11, and a tab 31 of the battery cell 3 is electrically connected to the conductive terminal 2.

The enclosure structure 1 is a structure that encloses the battery cell 3, and the accommodating space 11 of the enclosure structure 1 is mainly configured to accommodate the battery cell 3.

The conductive terminal 2 is electrically connected to the tab 31 of the battery cell 3, and the battery cell 3 supplies power to the outside via the conductive terminal 2, or the external power supply supplies power to the battery cell 3 via the conductive terminal 2.

Illustratively, the conductive terminal 2 is a busbar. The plurality of batteries 100 in the battery pack are connected in series, in parallel, or in parallel-series via the busbar.

Illustratively, the battery cell 3 includes a bare cell and an outer packaging that covers the bare cell to protect the bare cell. The bare cell includes a positive electrode plate, a negative electrode plate, and a separation film located between the positive electrode plate and the negative electrode plate.

The pressure relief opening 12 in communication with the accommodating space 11 is formed on one side of the enclosure structure 1, and the remaining part of the enclosure structure 1 is a sealing structure, which means that parts of the enclosure structure 1 covering the battery cell 3, other than the pressure relief opening 12, are substantially sealed. That is, parts of the enclosure structure 1 covering the battery cell 3, other than the pressure relief opening 12, may be fully sealed or may not be fully sealed. For the case where parts of the enclosure structure 1 covering the battery cell 3, other than the pressure relief opening 12, are not fully sealed, it is only necessary that the gaps at the positions where the enclosure structure 1 is not fully sealed can suppress, to some extent, the thermal runaway gas from being ejected from the positions where the enclosure structure 1 is not fully sealed, thereby guiding the thermal runaway gas to be ejected from the pressure relief opening 12.

The conductive terminal 2 and the pressure relief opening 12 are located on different sides of the enclosure structure 1; the thermal runaway gas ejected from the pressure relief opening 12 can be as far away as possible from the conductive terminal 2.

Illustratively, the number of battery cells 3 in the enclosure structure 1 may be one or at least two.

In the embodiments of the present disclosure, in the case where thermal runaway occurs in the battery cell 3 in the enclosure structure 1 of the battery 100, since the pressure relief opening 12 in communication with the accommodating space 11 is formed on one side of the enclosure structure 1, the resistance to the escape of the generated thermal runaway gas from parts of the enclosure structure 1 other than the pressure relief opening 12 is high, and it is difficult for the thermal runaway gas to flow out of the enclosure structure 1 from parts of the enclosure structure 1 other than the pressure relief opening 12. The enclosure structure 1 guides the thermal runaway gas to be ejected from the enclosure structure 1 via the pressure relief opening 12, thereby relieving the pressure in the accommodating space 11 in the enclosure structure 1 and enabling directional ejection of the thermal runaway gas. Since the conductive terminal 2 and the pressure relief opening 12 are located on different sides of the enclosure structure 1, the thermal runaway gas ejected from the pressure relief opening 12 and the substance carried by the thermal runaway gas can be as far away as possible from the conductive terminal 2.

In an embodiment, the battery cell 3 is a pouch battery cell.

The outer packaging that covers the bare cell of the pouch battery cell to protect the bare cell is a plastic film.

Illustratively, the plastic film is an aluminum-plastic film.

In the embodiments of the present disclosure, in the case where thermal runaway occurs in the battery cell 3, the thermal runaway gas generated by the bare cell breaks through the plastic film and is ejected outward in all directions, and the thermal runaway gas is ejected in a directed manner from the pressure relief opening 12 under the guidance of the enclosure structure 1.

It can be understood that the battery cell 3 is not limited to the pouch battery cell. Illustratively, the battery cell 3 may be a hard-shell battery cell 3, and the outer packaging covering the bare cell of the hard-shell battery cell 3 may be a metal shell or a plastic shell.

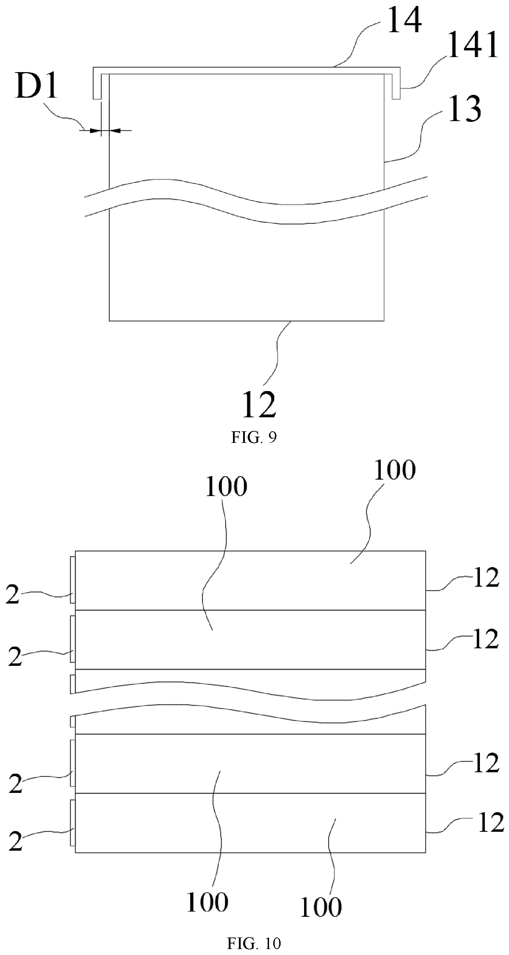

In an embodiment, referring to FIG. 10, the number of batteries 100 in the case of the battery pack is at least two, and the at least two batteries 100 are sequentially arranged. The conductive terminals 2 of the at least two sequentially arranged batteries 100 have the same orientation, and in the at least two sequentially arranged batteries 100, the orientations of the conductive terminals 2 are arranged to intersect with the direction in which the at least two batteries 100 are sequentially arranged.

The orientation of the conductive terminal 2 of the battery 100 is the direction in which the enclosure structure 1 of the battery 100 faces one side of the conductive terminal 2.

Illustratively, referring to FIG. 10, in the at least two sequentially arranged batteries 100, the orientations of the conductive terminals 2 are perpendicular to the direction in which the at least two batteries 100 are sequentially arranged.

In the embodiments of the present disclosure, the conductive terminal 2 and the pressure relief opening 12 are located on different sides of the enclosure structure 1, the conductive terminals 2 of the at least two sequentially arranged batteries 100 have the same orientation, and in the at least two sequentially arranged batteries 100, the orientations of the conductive terminals 2 are arranged to intersect with the direction in which the at least two batteries 100 are sequentially arranged. Therefore, the pressure relief openings 12 of the at least two sequentially arranged batteries 100 can avoid the conductive terminals 2 of the at least two sequentially arranged batteries 100, thereby reducing the possibility of short-circuiting between the conductive terminals 2 of adjacent batteries 100 caused by the thermal runaway gas ejected from the pressure relief opening 12 of any battery 100 in the at least two sequentially arranged batteries 100, and thus helping to suppress the thermal runaway of the battery 100 from propagating to adjacent batteries.

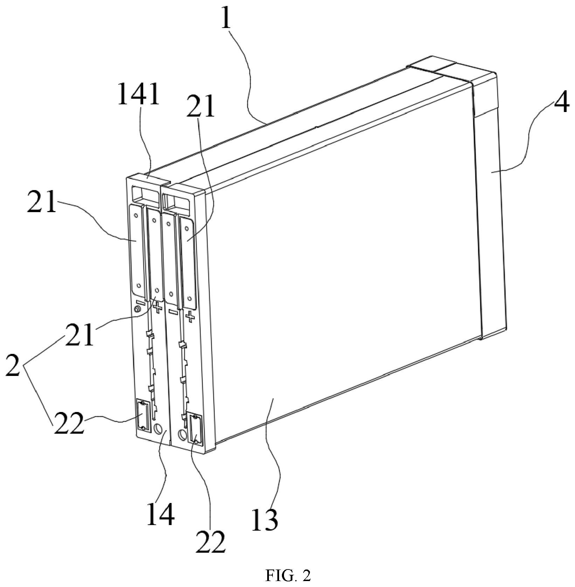

In an embodiment, referring to FIGs. 2 and 3, the number of battery cells 3 in the battery 100 is at least two, and the conductive terminal 2 includes a sampling electrode 22 and at least two connecting electrodes 21. One of the connecting electrodes 21 is electrically connected to a tab 31 of one of the battery cells 3, the other connecting electrode 21 is electrically connected to a tab 31 of the other battery cell 3, and the tabs 31 corresponding to the two connecting electrodes 21 have opposite polarities. The sampling electrode 22 is electrically connected to each of the tabs 31 corresponding to the two battery cells 3, and the tabs 31 corresponding to the two battery cells 3 and electrically connected to the sampling electrode 22 have opposite polarities.

The tabs 31 corresponding to the at least two connecting electrodes 21 have opposite polarities, with the polarity of one connecting electrode 21 being positive and the polarity of one connecting electrode 21 being negative. The battery cells 3 of the battery 100 can supply power to the outside via the connecting electrode 21, and the battery cells 3 of the corresponding battery 100 can be charged via the connecting electrode 21.

The sampling electrode 22 is electrically connected to each of the tabs 31 corresponding to the two battery cells 3, and the tabs 31 corresponding to the two battery cells 3 and electrically connected to the sampling electrode 22 have opposite polarities. Each sampling electrode 22 is electrically connected to the tab 31 of the positive electrode of one of the battery cells 3, and the tab 31 of the negative electrode of the other battery cell 3, and the battery cells 3 of the battery 100 are connected in series via the sampling electrode 22.

Illustratively, referring to FIGs. 2 and 3, both the connecting electrode 21 and the sampling electrode 22 are busbars.

In the embodiments of the present disclosure, the battery cells 3 of the battery 100 are connected in series via the sampling electrode 22, and the battery cells 3 of the battery 100 supply power to the outside via the connecting electrode 21, or the battery cells 3 are charged via the connecting electrode. The sampling electrode 22 connects the battery cells 3 of the battery 100 in series, and the potential of the sampling electrode 22 is the potential between the two series-connected battery cells 3. By measuring and sampling the voltage between the sampling electrode 22 and the corresponding connecting electrode 21, the operating state of the corresponding battery cell 3 can be determined. Since the conductive terminal 2 and the pressure relief opening 12 are located on different sides of the enclosure structure 1, the thermal runaway gas ejected from the pressure relief opening 12 can avoid the connecting electrode 21 and the sampling electrode 22 as much as possible.

In an embodiment, referring to FIGs. 1 to 3, the battery 100 further includes a flame-retardant cover 4 covering the pressure relief opening 12, and the pressure-bearing capacity of the enclosure structure 1 is greater than that of the flame-retardant cover 4.

The pressure-bearing capacity refers to the ability to withstand fluid pressure.

The relative magnitude of the pressure-bearing capacity can be measured by introducing gas into the enclosure structure 1. Specifically, since the flame-retardant cover 4 covers the pressure relief opening 12, the accommodating space 11 is substantially closed by the enclosure structure 1 and the flame-retardant cover 4. In the case where gas is introduced into the accommodating space 11, the gas pressure in the accommodating space 11 is continuously increased, and the gas pressure borne by the enclosure structure 1 and the flame-retardant cover 4 is continuously increased. During the process of continuously introducing gas into the accommodating space 11, the flame-retardant cover 4 is damaged earlier than the enclosure structure 1; that is, the pressure-bearing capacity of the flame-retardant cover 4 is less than that of the enclosure structure 1, and the load-bearing capacity of the enclosure structure 1 is greater than that of the flame-retardant cover 4.

The flame-retardant cover 4 has some flame-retardant capability. In the case where thermal runaway occurs in the battery 100, the flame-retardant cover 4 may deform due to a high temperature, but is unlikely to be ignited.

In the embodiments of the present disclosure, the flame-retardant cover 4 covers the pressure relief opening 12, and the flame-retardant cover 4 has some flame-retardant capability, which can reduce, to some extent, the possibility of ignition of the flame-retardant cover 4 in the case where thermal runaway occurs in the battery 100. The flame-retardant cover 4 covers the pressure relief opening 12, which can reduce the thermal runaway gas generated by adjacent batteries 100 from entering the accommodating space 11 via the pressure relief opening 12 in the case where thermal runaway occurs in the adjacent batteries 100, thereby helping to suppress the propagation of the thermal runaway to some extent. In the case where thermal runaway occurs in the battery cell 3 in the accommodating space 11, since the load-bearing capacity of the enclosure structure 1 is greater than that of the flame-retardant cover 4, the thermal runaway gas in the accommodating space 11 first breaks through the flame-retardant cover 4, such that the thermal runaway gas in the accommodating space 11 is ejected in a directed manner from the pressure relief opening 12.

In an embodiment, referring to FIGs. 1 to 3, the flame-retardant cover 4 may be made of mica.

Illustratively, the flame-retardant cover 4 is made of mica paper.

Illustratively, the mica paper is bonded to the enclosure structure 1.

In the embodiments of the present disclosure, the flame-retardant cover 4 is made of mica. Mica has some flame-retardant capability and is unlikely to be ignited in the case where thermal runaway occurs in the battery 100. The thin flame-retardant cover 4 made of mica may have a low pressure-bearing capacity.

In an embodiment, referring to FIG. 1, the flame-retardant cover 4 may be formed with a score 41.

Illustratively, referring to FIGs. 1, 3, and 4, the score 41 is located in the region corresponding to the pressure relief opening 12.

In the embodiments of the present disclosure, by forming the score 41 on the flame-retardant cover 4, the pressure-bearing capacity of the flame-retardant cover 4 can be reduced, such that in the case where thermal runaway occurs in the battery cell 3 in the accommodating space 11 of the enclosure structure 1, this configuration enables the thermal runaway gas in the accommodating space 11 to break through the flame-retardant cover 4 and be ejected from the pressure relief opening 12.

In an embodiment, referring to FIG. 1, the flame-retardant cover 4 is formed with a through hole 42 in communication with the accommodating space 11.

The through hole 42 on the flame-retardant cover 4 extends through the flame-retardant cover 4.

In the embodiments of the present disclosure, a part of the structure in the accommodating space 11 of the enclosure structure 1 needs to extend out of the accommodating space 11, and the part of the structure extends out of the accommodating space 11 from the through hole 42 of the flame-retardant cover 4. The position covered by the flame-retardant cover 4 functions as the pressure relief opening 12 for pressure relief. Even if a part of the structure in the accommodating space 11 extends out of the through hole 42, the through hole 42 does not need to be sealed, which is beneficial to simplifying the structure of the battery 100.

In an embodiment, referring to FIGs. 3, 7, and 8, the battery 100 further includes a temperature regulation container 5 partially located in the accommodating space 11, with battery cells 3 disposed on one side or two opposite sides of the temperature regulation container 5. The temperature regulation container 5 is provided with a temperature regulation chamber 51, and an inlet 52 and an outlet 53 that are each in communication with the temperature regulation chamber 51. The temperature regulation container 5 penetrates through the through hole 42, such that both the inlet 52 and the outlet 53 extend beyond the accommodating space 11 along a side, facing the flame-retardant cover 4, of the enclosure structure 1.

The battery cell 3 generates heat during operation, and the battery cell 3 also generates a large amount of heat in the case of thermal runaway. A fluid enters the temperature regulation chamber 51 of the temperature regulation container 5 via the inlet 52 of the temperature regulation container 5, and flows out of the temperature regulation chamber 51 from the outlet 53 of the temperature regulation container 5; the temperature of the battery cell 3 is regulated by the fluid flowing into and out of the temperature regulation chamber 51.

Illustratively, the fluid flowing through the temperature regulation chamber 51 of the temperature regulation container 5 may be liquid or gas.

Illustratively, a liquid or gas with a low temperature is introduced into the temperature regulation chamber 51 to cool the battery cell 3.

Illustratively, the temperature regulation container 5 may be a gas bag.

Illustratively, the gas bag may be made of rubber.

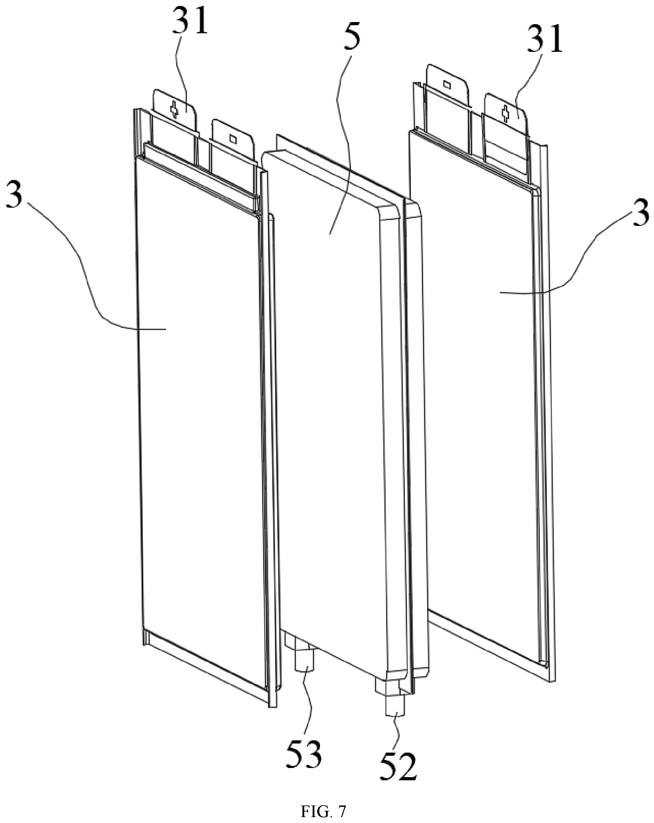

Illustratively, referring to FIGs. 3 and 7, battery cells 3 are disposed on two opposite sides of the temperature regulation container 5.

Illustratively, referring to FIG. 3, the number of battery cells 3 on each side is two, and the two battery cells 3 on each side are connected in series via the sampling electrode 22.

Illustratively, referring to FIG. 7, the number of battery cells 3 on each side is one.

Illustratively, the number of battery cells 3 on each side is one, and the two battery cells 3 located on two sides of the temperature regulation container 5, respectively, are connected in series via the sampling electrode 22.

In the embodiments of the present disclosure, the inlet 52 and the outlet 53 of the temperature regulation container 5 extend beyond the accommodating space 11 through the through holes 42 of the flame-retardant cover 4, such that the temperature regulation container 5 can be connected to an external fluid source via the inlet 52 and the outlet 53, and the external fluid can enter the temperature regulation container 5 via the inlet 52 and flow out via the outlet 53, thereby regulating the temperature of the battery cell 3. The inlet 52 and the outlet 53 of the temperature regulation container 5 extend beyond the accommodating space 11 through the through holes 42 of the flame-retardant cover 4, and the through holes 42 do not need to be sealed, which is beneficial to simplifying the structure of the battery 100.

It can be understood that the structure extending out of the accommodating space 11 of the enclosure structure 1 from the through hole 42 of the flame-retardant cover 4 is not necessarily the temperature regulation container 5, but may be other structures partially located in the accommodating space 11 of the enclosure structure 1 as required.

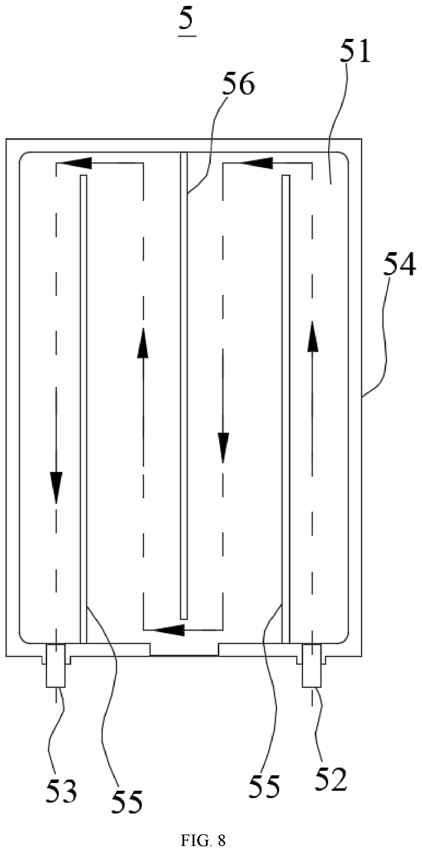

In an embodiment, referring to FIG. 8, the temperature regulation container 5 includes a container body 54, a first flow guide plate 55, and a second flow guide plate 56. The temperature regulation chamber 51, the inlet 52, and the outlet 53 are all formed in the container body 54. One end, facing the pressure relief opening 12, of the container body 54 is a target end, and both the outlet 53 and the inlet 52 are located at the target end of the container body 54. The first flow guide plate 55 is located in the temperature regulation chamber 51. The first flow guide plate 55 is connected to the chamber wall, facing the target end, of the temperature regulation chamber 51, and the first flow guide plate 55 is spaced apart from the chamber wall, facing away from the target end, of the temperature regulation chamber 51. The number of first flow guide plates 55 is more than one, and the plurality of first flow guide plates 55 are located between the outlet 53 and the inlet 52. The second flow guide plate 56 is located in the temperature regulation chamber 51. The second flow guide plate 56 is spaced apart from the chamber wall, facing the target end, of the temperature regulation chamber 51, and the second flow guide plate 56 is connected to the chamber wall, facing away from the target end, of the temperature regulation chamber 51. The second flow guide plate 56 is located between the first flow guide plate 55 closest to the outlet 53 and the first flow guide plate 55 closest to the inlet 52.

The container body 54 is mainly configured to contain a fluid capable of regulating temperature.

The first flow guide plate 55 and the second flow guide plate 56 are configured to guide the fluid to flow within the temperature regulation chamber 51.

In the embodiments of the present disclosure, the first flow guide plate 55 is connected to the chamber wall, facing the target end, of the cooling chamber, and the first flow guide plate 55 is spaced apart from the chamber wall, facing away from the target end, of the cooling chamber; the second flow guide plate 56 is spaced apart from the chamber wall, facing the target end, of the cooling chamber, the second flow guide plate 56 is connected to the chamber wall, facing away from the target end, of the cooling chamber, and the second flow guide plate 56 is located between the first flow guide plate 55 closest to the outlet 53 and the first flow guide plate 55 closest to the inlet 52. Therefore, the first flow guide plate 55 and the second flow guide plate 56 are distributed in a staggered manner in the accommodating space 11, and the fluid entering the temperature regulation chamber 51 from the inlet 52 flows through a long path under the guidance of the first flow guide plate 55 and the second flow guide plate 56 and then flows out from the outlet 53, which facilitates sufficient temperature regulation of the fluid within the temperature regulation chamber 51.

It can be understood that the first flow guide plate 55 and the second flow guide plate 56 may not be provided in the temperature regulation chamber 51 as required.

In an embodiment, both the ignition temperature of the flame-retardant cover 4 and the ignition temperature of the enclosure structure 1 are greater than or equal to 800 °C.

Illustratively, the ignition temperature of the flame-retardant cover 4 may be 800 °C, 810 °C, 860 °C, 900 °C, or the like.

Illustratively, the ignition temperature of the flame-retardant cover 4 may be measured by heating the flame-retardant cover 4 to incipient combustion.

Illustratively, the ignition temperature of the enclosure structure 1 may be measured by heating the enclosure structure 1 to incipient combustion.

In the embodiments of the present disclosure, the ignition temperature of the flame-retardant cover 4 and the ignition temperature of the enclosure structure 1 are high, and the flame-retardant cover 4 and the enclosure structure 1 are unlikely to be ignited even under the influence of high-temperature thermal runaway gas.

In an embodiment, referring to FIGs. 1 to 3 and FIG. 9, the enclosure structure 1 includes a housing 13 and a top cover 14. The pressure relief opening 12 of the housing 13 is formed on one side of the housing 13. The top cover 14 and the housing 13 define, in an enclosing manner, an accommodating space 11, and a conductive terminal 2 is mounted to the top cover 14.

Illustratively, a mica paper is bonded to the housing 13.

In the embodiments of the present disclosure, before the top cover 14 is mounted to the housing 13, the conductive terminal 2 on the top cover 14 may be electrically connected to the tab 31 of the battery cell 3, and then the connected top cover 14, conductive terminal 2, and battery cell 3 are mounted to the housing 13, thereby facilitating the connection between the conductive terminal 2 and the battery cell 3 before the conductive terminal and the battery cell are placed into the housing.

It can be understood that the enclosure structure 1 is not limited to a structure in which the top cover 14 is mounted to the housing 13. Illustratively, the enclosure structure 1 may be an integrally formed structure.

In an embodiment, referring to FIGs. 1 to 3 and FIG. 9, the top cover 14 is provided with a flange 141 covering a side wall of the housing 13, and the gap between the flange 141 and the side wall of the housing 13 is less than or equal to 0.5 mm.

Illustratively, the gap between the flange 141 and the side wall of the housing 13 may be 0.5 mm, 0.4 mm, 0.3 mm, 0.2 mm, or 0.1 mm.

Illustratively, before the top cover 14 is placed into the housing 13, but the top cover 14 is not connected to the housing 13, the dimension between the flange 141 and the side wall of the housing 13 may be measured using a plug gauge, a vernier caliper, or a micrometer caliper.

Illustratively, the dimension of the span of the flange 141 of the top cover 14 and the dimension of the corresponding span of the housing 13 may also be separately measured using a vernier caliper, a micrometer caliper, or the like, and half of the difference between the two is the gap between the top cover 14 and the housing 13.

Illustratively, referring to FIG. 9, the gap between the flange 141 and the side wall of the housing 13 is D1, and D1 ≤ 0.5 mm.

In the embodiments of the present disclosure, the flange 141 and the side wall of the housing 13 are not fully sealed, and the gap between the flange 141 and the side wall of the housing 13 is appropriately configured, such that the resistance to the escape of the thermal runaway gas from between the flange 141 and the side wall of the housing 13 is high, which can better suppress the thermal runaway gas from being ejected toward the top cover 14, thereby better guiding the thermal runaway gas in the accommodating space 11 to be ejected from the pressure relief opening 12, and thus helping to reduce the degree of thermal runaway of the battery 100.

In an embodiment, referring to FIGs. 4 and 5, the housing 13 includes a plurality of bent plates 131 that are sequentially bent, bent plates 131 at two circumferential ends of the battery cell 3 are connected, and the plurality of bent plates 131 define, in an enclosing manner, the pressure relief opening 12. The top cover 14 and the pressure relief opening 12 are located on two opposite sides of the housing 13, respectively, and the top cover 14 and the plurality of bent plates 131 define, in an enclosing manner, the accommodating space 11. The enclosure structure 1 further includes an insulating layer 15, and the insulating layer 15 covers an inner surface of the housing 13.

The housing 13 includes a plurality of bent plates 131. The housing 13 is formed by bending a single plate multiple times and connecting the bent plates 131 at two ends. The state of the housing 13 before bending is an unfolded state.

Illustratively, the insulating layer 15 covers the housing 13 by means of hot pressing.

Illustratively, the insulating layer 15 is formed on the housing 13 by coating.

In the embodiments of the present disclosure, the housing 13 is substantially of a flat-plate shape in the unfolded state. The insulating layer 15 may first cover the housing 13 in the unfolded state, and then the housing 13 and the insulating layer 15 are bent together. After the housing 13 is bent into shape, the insulating layer 15 covers the inner surface of the housing 13. The insulating layer 15 covers the housing 13 when the housing 13 is in the unfolded state, such that the insulating layer 15 can be conveniently mounted to the housing 13.

In an embodiment, referring to FIGs. 4 and 5, the housing 13 is made of metal; the battery 100 further includes a reinforcing plate 6, and the reinforcing plate 6 is located on an inner surface of the housing 13. The bent plates 131 at the two circumferential ends of the battery cell 3 are connected by welding. The position where the bent plates 131 at the two circumferential ends of the battery cell 3 are welded is a target position, and the reinforcing plate 6 is welded to the housing 13 at the target position.

It should be noted that the reinforcing plate 6 is welded to the housing 13, and the reinforcing plate 6 is made of a material that can be welded to the housing 13.

Illustratively, both the housing 13 and the reinforcing plate 6 are made of metal.

Illustratively, the bent plates 131 at two circumferential ends of the battery cell 3 are connected by welding, and the welding mode is laser welding.

In the embodiments of the present disclosure, the reinforcing plate 6 is welded to the housing 13 at the target position, such that the housing 13 and the reinforcing plate 6 are welded together, and the reinforcing plate 6 supports the housing 13 at the target position, thereby reducing the possibility of the bent plates 131 at two ends of the housing 13 being welded through during the welding process.

In an embodiment, referring to FIG. 6, the housing 13 is made of metal, and the thickness of the housing 13 is 0.1 mm to 1 mm.

Illustratively, referring to FIG. 6, the thickness of the housing 13 is D2, and 0.1 mm ≤ D2 ≤ 1 mm.

Illustratively, the thickness of the housing 13 may be 0.1 mm, 0.2 mm, 0.3 mm, 0.4 mm, 0.5 mm, 0.8 mm, or 1 mm.

In the embodiments of the present disclosure, as the housing 13 is made of a metal material, the thickness of the housing 13 is set to be appropriate, such that the housing 13 is lightweight while having substantially sufficient load-bearing capacity.

In an embodiment, referring to FIG. 6, the housing 13 is made of plastic, the housing 13 is an integrally formed structure, and the thickness of the housing 13 is 1 mm to 3 mm.

Illustratively, referring to FIG. 6, the thickness of the housing 13 is D2, and 1 mm ≤ D2 ≤ 3mm.

Illustratively, referring to FIG. 6, the thickness of the housing 13 may be 1 mm, 1.2 mm, 1.5 mm, 1.8 mm, 2 mm, 2.3 mm, 2.6 mm, 2.9 mm, or 3 mm.

In the embodiments of the present disclosure, as the housing 13 is made of a plastic material, the thickness of the housing 13 is set to be appropriate, such that the housing 13 is lightweight while having substantially sufficient load-bearing capacity.

In an embodiment, referring to FIGs. 1 to 3, the top cover 14 is made of plastic, and the housing 13 is made of metal or plastic.

In an embodiment, referring to FIGs. 1 to 3, the top cover 14 is made of plastic, the housing 13 is made of metal or plastic, and the flame-retardant cover 4 is made of mica.

Illustratively, the housing 13 may be made of a metal such as steel, aluminum, an aluminum alloy, copper, or a copper alloy.

Illustratively, the aluminum alloy may be an aluminum-magnesium alloy.

Illustratively, the top cover 14 may be made of an engineering plastic such as polypropylene or polyethylene.

In the embodiments of the present disclosure, the top cover 14 made of a plastic material enables the top cover 14 to have some pressure-bearing capacity. The housing 13 made of a plastic material or the housing 13 made of a metallic material enables the housing 13 to have some pressure-bearing capacity.

It can be understood that the material of the flame-retardant cover is not limited to mica. Illustratively, the flame-retardant cover may be made of glass fiber.

In an embodiment, referring to FIGs. 1 to 3, the conductive terminal 2 and the pressure relief opening 12 are located on two opposite sides of the enclosure structure 1, respectively.

In the embodiments of the present disclosure, since the conductive terminal 2 and the pressure relief opening 12 are located on two opposite sides of the enclosure structure 1, respectively, the conductive terminal 2 can be as far away as possible from the pressure relief opening 12, and the thermal runaway gas ejected from the pressure relief opening 12 and the substance carried by the thermal runaway gas can be away from the conductive terminal 2. Correspondingly, in the at least two sequentially arranged batteries 100, the pressure relief openings 12 of the at least two sequentially arranged batteries 100 can be as far away as possible from the conductive terminals 2 of the at least two sequentially arranged batteries 100, which can reduce the possibility that the thermal runaway gas ejected from the pressure relief openings 12 of the at least two sequentially arranged batteries 100 is ejected toward the conductive terminals 2 of adjacent batteries 100 and causes short-circuiting between the adjacent batteries 100, thereby reducing the possibility of propagation of the thermal runaway to the adjacent batteries 100 as much as possible.

It can be understood that the arrangement manner of the conductive terminal 2 and the pressure relief opening 12 is not limited. Illustratively, the direction in which the enclosure structure 1 faces the conductive terminal 2 is arranged to intersect with the direction in which the enclosure structure 1 faces the pressure relief opening 12.

The embodiments of the present disclosure further provide a battery module. Referring to FIG. 10, the battery module includes at least two batteries 100 according to any one of the above embodiments, and the at least two batteries 100 are sequentially arranged. The conductive terminals 2 of the at least two sequentially arranged batteries 100 have the same orientation, and in the at least two sequentially arranged batteries 100, the orientations of the conductive terminals 2 are arranged to intersect with the direction in which the at least two batteries 100 are sequentially arranged.

In the embodiments of the present disclosure, the conductive terminal 2 and the pressure relief opening 12 are located on different sides of the enclosure structure 1, respectively, the conductive terminals 2 have the same orientation, and the orientations of the conductive terminals 2 are arranged to intersect with the direction in which the batteries 100 are sequentially arranged. Therefore, the possibility of short-circuiting between the conductive terminals 2 of adjacent batteries 100 caused by the thermal runaway gas ejected from the pressure relief openings can be reduced, thereby reducing the possibility of propagation of the thermal runaway to the adjacent batteries 100.

In an embodiment, referring to FIGs. 1 to 9, the battery 100 includes a top cover 14, a pouch battery cell, a housing 13, and mica paper. The top cover 14 may be configured to be assembled with the housing 13. The housing 13 includes five bent plates 131 that are sequentially bent, and the five bent plates 131 of the housing 13 enclose the accommodating space 11 in four directions corresponding to the accommodating space 11. The top cover 14 is mounted to the housing 13, and the top cover 14 seals the accommodating space 11 in a direction from the accommodating space 11 to the top cover 14. That is, the housing 13 and the top cover 14 enclose the accommodating space 11 in five directions. The battery cell 3 is mounted in the housing 13, and the mica paper covers the pressure relief opening 12 of the housing 13. In the case where thermal runaway occurs in the pouch battery cell in the housing 13, the gas generated by the thermal runaway and the substance carried by the gas are ejected from the mica paper at the pressure relief opening 12, thereby enabling directional ejection in the pouch battery cell. The accommodating space 11 enclosed by the housing 13, the top cover 14, and the mica paper, does not need to be fully sealed, as long as the gas generated by the thermal runaway can be guided to be ejected in a directed manner. The mica paper is bonded to the housing 13. A score 41 is formed on the mica paper, and the score 41 is located in a region corresponding to the pressure relief opening 12 of the housing 13. The score 41 may serve as a rupture point during thermal runaway. A through hole 42 through which the structure in the accommodating space 11 extends is formed on the mica paper. The top cover 14 is an injection-molded member, the conductive terminal 2 is a busbar embedded in the top cover 14, and the top cover 14 may further include other metal inserts embedded therein. The top cover 14 may be connected to the housing 13 by bonding, hot pressing, welding, or other means. The top cover 14 and the housing 13 do not need to be fully sealed, and a gap of less than or equal to 0.5 mm or another structure that can suppress, to some extent, the thermal runaway gas from being ejected between the housing 13 and the top cover 14 may be provided between the top cover 14 and the housing 13, thereby suppressing the ejection of the thermal runaway gas from between the housing 13 and the top cover 14. A pouch battery cell is placed in the housing 13; other structures than the pouch battery cell may also be placed in the housing 13, and the number of cells in the housing 13 is greater than or equal to 1 and less than or equal to 4. The housing 13 is a metal housing 13 with a thickness of 0.1 mm to 1 mm, and an insulating coating layer formed by spraying or an insulating layer 15 formed by hot pressing is provided inside the housing 13. The battery 100 further includes a separating layer 7, and battery cells 3 are disposed on two opposite sides of the separating layer 7 in a thickness direction of the separating layer to separate the battery cells 3 on the two sides. The housing 13 is made of metal, and the bent plates 131 at two circumferential ends of the battery cell 3 are welded to form a weld spot 8. The weld spot 8 is located on one side of the separating layer 7 in a preset direction. The preset direction is perpendicular to the thickness direction of the separating layer 7, and a projection region of the weld spot 8 in the preset direction is located in a projection region of the separating layer 7 in the preset direction. The maximum span of the weld spot 8 in the thickness direction of the separating layer 7 is a preset distance, the ratio of the thickness of the separating layer 7 to the preset distance is greater than or equal to 1.2, and the ratio of the thickness of the separating layer 7 to the preset distance is less than or equal to 3.

Illustratively, referring to FIGs. 4 and 5, the housing 13 is formed by bending a plate material, and the housing 13 includes a plurality of bent plates 131 that are sequentially bent. The bent plates 131 at two circumferential ends of the battery cell 3 are connected by welding, thereby forming a continuous annular housing 13. The number of weld seams of the housing 13 is one, and a reinforcing plate 6 may be arranged at the position of the welding seam to reduce the possibility of the corresponding bent plate 131 being welded through.

Illustratively, two weld seams may also be provided, such that two parts of the housing 13 may also be welded at different positions to form the annular housing 13.

Illustratively, the housing 13 may alternatively be integrally formed. The housing 13 is not subjected to welding.

Illustratively, the bent plates 131, at two circumferential ends of the battery cell 3, of the housing 13 may also be formed by bonding and other methods, in addition to welding.

Illustratively, the housing 13 may be integrally formed using a high-temperature-resistant plastic, and the thickness of the housing 13 may be 1 mm to 3 mm.

The above descriptions are only preferred embodiments of the present disclosure and are not intended to limit the present disclosure. For those skilled in the art, the present disclosure can be modified and varied. Any modification, equivalent substitution, improvement, and the like made within the spirit and principle of the present disclosure should fall within the protection scope of the present disclosure.

## Claims

1. A battery, comprising:
an enclosure structure, defining an accommodating space, wherein a pressure relief opening in communication with the accommodating space is formed on one side of the enclosure structure, and a remaining part of the enclosure structure is a sealing structure; the enclosure structure comprises a housing and a top cover, the pressure relief opening is formed on one side of the housing, the top cover and the housing define, in an enclosing manner, the accommodating space, and the housing comprises a plurality of bent plates that are sequentially bent;
a conductive terminal, connected to the enclosure structure, wherein the conductive terminal is mounted to the top cover, and the conductive terminal and the pressure relief opening are located on different sides of the enclosure structure; and
a battery cell, located in the accommodating space, wherein a tab of the battery cell is electrically connected to the conductive terminal, bent plates at two circumferential ends of the battery cell are connected, and the plurality of bent plates define, in an enclosing manner, the pressure relief opening; the top cover and the pressure relief opening are located on two opposite sides of the housing, respectively, and the top cover and the plurality of bent plates define, in an enclosing manner, the accommodating space.

2. The battery according to claim 1, wherein the housing is made of metal, the battery further comprises a reinforcing plate, and the reinforcing plate is located on an inner surface of the housing; the bent plates at the two circumferential ends of the battery cell are connected by welding, a position where the bent plates at the two circumferential ends of the battery cell are welded is a target position, and the reinforcing plate is welded to the housing at the target position.

3. The battery according to claim 2, wherein the reinforcing plate is located between the bent plates at the two circumferential ends of the battery cell.

4. The battery according to claim 2, wherein the bent plates at the two circumferential ends of the battery cell are located on a side, facing away from the battery cell, of the reinforcing plate.

5. The battery according to any one of claims 1 to 4, wherein the enclosure structure further comprises an insulating layer, and the insulating layer covers the inner surface of the housing.

6. The battery according to any one of claims 1 to 5, wherein the battery further comprises a separating layer, and battery cells are disposed on two opposite sides of the separating layer in a thickness direction of the separating layer to separate the battery cells on the two sides; the housing is made of metal, and the bent plates at the two circumferential ends of the battery cell are welded to form a weld spot, the weld spot being located on one side of the separating layer in a preset direction, wherein the preset direction is perpendicular to the thickness direction of the separating layer, and a projection region of the weld spot in the preset direction is located in a projection region of the separating layer in the preset direction.

7. The battery according to claim 6, wherein a maximum span of the weld spot in the thickness direction of the separating layer is a preset distance, a ratio of a thickness of the separating layer to the preset distance is greater than or equal to 1.2, and the ratio of the thickness of the separating layer to the preset distance is less than or equal to 3.

8. The battery according to claim 7, wherein the ratio of the thickness of the separating layer to the preset distance is greater than or equal to 1.5, and the ratio of the thickness of the separating layer to the preset distance is less than or equal to 2.5.

9. The battery according to any one of claims 5 to 8, wherein the thickness direction of the separating layer is arranged to intersect with a large surface of the battery cell.

10. The battery according to any one of claims 1 to 9, wherein the battery cell is a pouch battery cell.

11. A battery pack, comprising:
a case; and
the battery according to any one of claims 1 to 10, located in the case.

12. An electric device, comprising:
a device body; and
the battery pack according to claim 11, mounted to the device body to supply power to the device body.
